# EUROPÄISCHE PATENTSCHRIFT

(11) **EP 1 395 474 B1**
(45) Veröffentlichungstag und Bekanntmachung des Hinweises auf die Patenterteilung: **13.10.2004**
(21) Anmeldenummer: 02742789.7
(22) Anmeldetag: 04.06.2002
(51) Int. Cl.: B60T 7/10

(54) **FESTSTELLBREMSE FÜR EIN KRAFTFAHRZEUG**
PARKING BRAKE FOR A MOTOR VEHICLE
FREIN DE STATIONNEMENT DE VEHICULE AUTOMOBILE

(30) Priorität: 09.06.2001 DE 20109711 U
(43) Veröffentlichungstag der Anmeldung: 10.03.2004
(73) Patentinhaber: Edscha Betätigungssysteme GmbH, 94491 Hengersberg (DE)
(72) Erfinder: BRAKER, Ulf, 13158 Berlin (DE)
(74) Vertreter: Sparing, Rolf Klaus
(86) Internationale Anmeldenummer: PCT/DE2002/002029
(87) Internationale Veröffentlichungsnummer: WO 2002/100695

(56) Entgegenhaltungen:
- US-A- 4 515 036
- US-A- 5 309 786
- US-A- 5 533 420

## Beschreibung

Die vorliegende Erfindung betrifft eine Feststellbremse für ein Kraftfahrzeug nach dem Oberbegriff des Anspruchs 1.

Im modernen Kraftwagenbau werden zunehmend Feststellbremsen eingesetzt, bei denen eine automatische Nachstellung des Seilzuges vorgesehen ist. Dabei wird eine Nachstellung zumeist mittels eines federbelasteten Elements durchgeführt, wobei eine Arretierung des Elements in Zugrichtung des Seilzuges mit Hilfe des Raste-Sperrklinke-Prinzips erfolgt.

US 5,533,420 zeigt eine Feststellbremse, bei der eine Nachstellung des Seilzuges mittels einer Trommel, die über eine innenliegende, als Schraubenfeder ausgebildete Kupplungsfeder in einer Richtung drehfest mit einem Betätigungshebel verbindbar ist. In der anderen Richtung ist die Trommel gegenüber dem Betätigungshebel drehbar, da in dieser Richtung die Reibungswirkung der Trommel die Kupplungsfeder so mitnimmt, daß die Kupplungsfeder in ihrem Durchmesser verjüngt wird, wodurch die Kupplungskraft letztlich aufgehoben wird. Dagegen wirkt die Reibung der Trommel in der drehfesten Richtung aufspreizend auf die Kupplungsfeder, so daß eine reibschlüssige, sich selbst verstärkende drehfeste Verbindung zwischen Trommel und Betätigungshebel besteht. Der Seilzug zur Betätigung der Bremse ist dabei von außen an der Trommel festgelegt. Eine automatische Nachstellung des Seilzuges wird durch eine Nachstellfeder, durch welche die Trommel ständig in der gegenüber dem Betätigungshebel drehbaren Richtung kraftbeaufschlagt ist, gewährleistet. Dabei ist die Trommel um eine Achse drehbar, welche beabstandet zu einer Drehachse des Betätigungshebels angeordnet ist, so daß insgesamt eine Vielzahl von Bauteilen notwendig wird. Zudem ist die Kupplungsfeder mit einem nach innen abgeknickten Ende ihres Federdrahtes gegen den Betätigungshebel abgestützt. Dies führt zumindest bei Schraubenfedern, deren Innendurchmesser groß gegen den Durchmesser des Federdrahtes ist, zu einem großen Knickmoment an dem Ende des Federdrahtes. Bei der gezeigten Anordnung wird dementsprechend eine innenliegende Kupplungsfeder benutzt, die einen relativ kleinen Innendurchmesser aufweist. Die hierbei problematische Erreichung eines ausreichend großen, reibungsbedingten Haltemoments der Trommel bei einer Betätigung der Feststellbremse wird wiederum durch eine Ausgestaltung des Federdrahtes mit einem rechteckigen Querschnitt begünstigt.

US 5,309,786 A zeigt eine Feststellbremse, bei der ein Bremstätigungshebel schwenkbar um eine Achse gelagert und in einer lösbaren Stellung festlegbar ist. Der Bremsbetätigungshebel ist mittels einer Seilscheibe mit einem Seilzug gekoppelt, wobei die Seilscheibe gegenüber dem Bremsbetätigungshebel verdrehbar ist. An der Seilscheibe ist eine Trommel angeordnet, in der ein Federelement zum Nachstellen des Seilzugs gegenüber dem Bremsbetätigungshebel vorgesehen, das mit seinem ersten Ende an der Achse und mit seinem zweiten Ende in einer an der Umfangswandung der Trommel angeordneten Öffnung festgelegt ist.

US 4,515,036 A zeigt eine Feststellbremse, bei der ein als Handbremshebel ausgebildeter Bremsbetätigungshebel schwenkbar um eine an einem Halter angeordnete Achse vorgesehen ist, wobei der Bremsbetätigungshebel mittels einer Seilscheibe mit einem Seilzug gekoppelt ist. Die Seilscheibe ist gegenüber dem Bremsbetätigungshebel drehbar auf der Achse vorgesehen, wobei ein axial auf der Achse angeordnetes Federelement zum Nachstellen des Seilzugs mit seinem ersten Ende an dem Halter und mit seinem zweiten Ende an der Seilscheibe festgelegt ist.

Es ist die Aufgabe der Erfindung, eine Feststellbremse mit einer automatischen Seilzugnachstellung zu schaffen, bei der eine stufenlose Nachstellung des Seilzugs mit möglichst wenigen und kostengünstig herstellbaren Bauteilen gewährleistet ist.

Diese Aufgabe wird für die eingangs genannte Feststellbremse erfindungsgemäß mit den kennzeichnenden Merkmalen des Anspruchs 1 gelöst.

Dabei wird vorteilhaft eine gemeinsame Lagerung der Trommel und des Betätigungshebels dadurch ermöglicht, daß die Trommel und der Betätigungshebel um die gleiche Achse drehbar sind. Zudem wird bei einer erfindungsgemäßen Feststellbremse eine einfache und sichere Abstützung des Federdrahtes dadurch gewährleistet, daß das abgestützte bzw. festgelegte Ende des Federdrahtes im wesentlichen tangential aus der Trommel herausgeführt ist. Hierdurch kann vorteilhaft auch ein Federelement eingesetzt werden, bei dem der Durchmesser groß gegen den Durchmesser des Federdrahtes ist.

In einer bevorzugten Weiterbildung einer erfindungsgemäßen Feststellbremse sind in der Umfangswandung der Trommel Durchbrechungen vorgesehen, wobei sowohl das feste Ende als auch ein freies Ende des Federdrahts durch die Durchbrechungen aus der Trommel herausgeführt sind. Dabei kann vorteilhaft in einer nicht betätigten Position der Feststellbremse der Betätigungshebel gegen das freie Ende abgestützt sein, so daß das Federelement in dieser nicht betätigten Position der Feststellbremse keine drehfeste Verbindung zwischen der Trommel und dem Betätigungshebel herstellt.

Vorzugsweise ist an dem Betätigungshebel ein Rastenelement ausgebildet, wobei das Rastenelement an dem Betätigungshebel klemmend gehaltert und in einer Ebene mit dem Betätigungshebel angeordnet ist. Dadurch wird vorteilhaft erreicht, daß lediglich das Rastenelement aus einem den Anforderungen entsprechenden härteren Material ausgebildet sein muß und gleichzeitig die Bauweise von Betätigungshebel und Rastenelement so flach ist, als seien die Rasten direkt am Betätigungshebel ausgeformt.

Vorteilhaft ist die Trommel in einer bevorzugten Ausführungsform einer erfindungsgemäßen Feststellbremse mit einer Bodenplatte versehen, wobei mittels einer Ausformung der Bodenplatte eine Aussparung gebildet ist. So kann vorteilhaft die Nachstellfeder innerhalb der Aussparung der Trommel angeordnet sein, wodurch der durch die Umfangswandung der Trommel umfaßte Raum sowohl das Federelement als auch die Nachstellfeder enthält und somit eine raumsparende Bauweise einer erfindungsgemäßen Feststellbremse ermöglicht wird.

Das Zugseil einer erfindungsgemäßen Feststellbremse ist in einer bevorzugten Weiterbildung außen auf der Umfangswandung der Trommel festgelegt. Besonders bevorzugt ist dabei das Zugseil in einer oder mehreren Windungen um die Trommel gelegt, so daß durch die hierdurch hervorgerufene Haltewirkung eine Öse oder eine Vorrichtung zur Halterung des Endes des Zugseils entsprechend einfach und kleinbauend ausgelegt sein kann.

Weitere Vorteile und Merkmale einer erfindungsgemäßen Feststellbremse ergeben sich aus dem nachfolgend beschriebenen Ausführungsbeispiel sowie aus den abhängigen Ansprüchen.

Nachfolgend wird ein bevorzugtes Ausführungsbeispiel einer erfindungsgemäßen Feststellbremse beschrieben und anhand der anliegenden Zeichnungen näher erläutert.
- Fig. 1: zeigt eine schematische Seitenansicht einer erfindungsgemäßen Feststellbremse.
- Fig. 2: zeigt eine Draufsicht von oben auf eine erfindungsgemäße Feststellbremse gemäß Fig. 1.

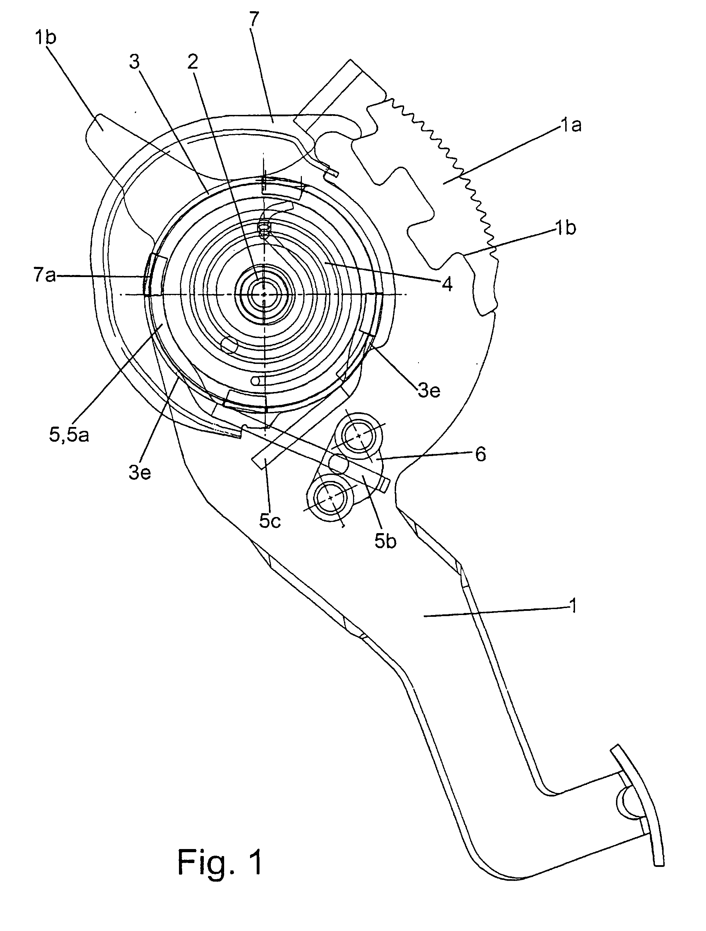

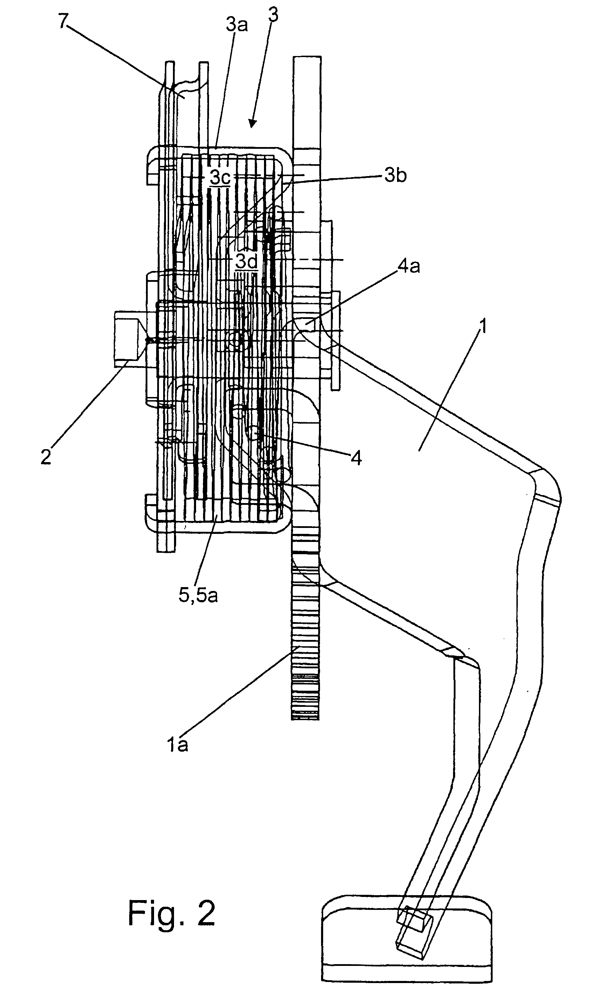

Die in Fig. 1 gezeigte erfindungsgemäße Feststellbremse umfaßt einen als Pedal ausgebildeten Betätigungshebel 1, der um eine Achse 2 drehbar gelagert ist ein Rastenelement 1a ist mittels korrespondierenden Ausnehmungen 1b an dem Betätigungshebel 1 klemmend gehaltert. Wie insbesondere aus Fig. 2 ersichtlich ist, liegen dabei das Rastenelement 1a und ein plattenförmiger Bereich des Betätigungshebels 1 in einer Ebene. Ferner ist an dem Betätigungshebel 1 ein Anschlag 1b ausgebildet.

Eine Trommel 3 ist um die Achse 2 drehbar gelagert. Die Trommel 3 besteht im wesentlichen aus aus einem Blechformteil und weist eine Umfangswandung 3a auf, welche einen Innenraum 3c der Trommel definiert. Eine Bodenplatte 3b der Trommel 3 ist konisch zulaufend ausgeformt, so daß eine Aussparung 3d gebildet ist, in welcher eine Nachstellfeder 4 angeordnet ist. Die Nachstellfeder 4 ist mit einem Ende 4a ihres Federdrahtes am Betätigungshebel 1 und mit einem anderen Ende ihres Federdrahtes an der Trommel 3 festgelegt, so daß die Trommel in Drehrichtung des Uhrzeigersinns (siehe Fig. 1) mittels einer Vorspannung der Nachstellfeder 4 mit einem Drehmoment beaufschlagt ist.

Ein als aus einem Federdraht 5a gewickelte Schraubenfeder ausgebildetes Federelement 5 ist in dem Innenraum 3c der Trommel 3 angeordnet und mit den Wicklungen des Federdrahtes 5a von innen gegen die Umfangswandung 3a der Trommel 3 abgestützt. Ein festes Ende 5b ist mittels Durchbrechungen 3e der Umfangswandung 3a aus der Trommel 3 herausgeführt und mittels eines Widerlagers 6 an dem Betätigungshebel 1 gehaltert.

Ein freies Ende 5c des Federdrahtes 5a ist ebenfalls mittels Durchbrechungen 3e der Umfangswandung 3a aus der Trommel herausgeführt. In einer nicht betätigten Stellung des Betätigungshebels 1 der Feststellbremse schlägt das freie Ende 5c an einem (nicht dargestellten) karosseriefesten Anschlag an.

Ein Seilaufnahmeteil 7 ist mittels Klammern 7a fest mit der Trommel 3 verbunden. ein (nicht dargestelltes), zu einer Bremse des Fahrzeugs führendes Zugseil ist an dem Seilaufnahmeteil 7 festgelegt und in dem Seilaufnahmeteil 7 geführt, so daß das Zugseil die Trommel 3 bzw. das Seilaufnahmeteil 7 etwa in Form eines Halbkreises umläuft.

### Die Erfindung funktioniert nun wie folgt:

In einer nicht betätigten Stellung des Betätigungshebels 1 wird der Betätigungshebel 1 durch das Zugseil der Bremse und den Anschlag 1b in seiner Position gehalten. Die Nachstellfeder 4 dreht dabei die Trommel 3 um die Achse 2 so weit in Richtung des Uhrzeigersinns, bis das Zugseil der Bremse vorgespannt und ohne Spiel ist. Die Drehung in Richtung des Uhrzeigersinns wird dadurch ermöglicht, daß das Federelement in dieser Richtung keine oder nur eine geringe Sperrwirkung auf die Drehung der Trommel 3 relativ zum Betätigungshebel 1 hat. Eine zusätzliche Verringerung der Sperrwirkung in der nicht betätigten Position des Betätigungshebels 1 kann dadurch erreicht werden, daß in dieser Stellung ein (nicht dargestellter) karosseriefester Anschlag an dem freien Ende 5c des Federelements 5 angreift, wodurch das Federelement 5 verjüngt wird und eine Reibung mit der Umfangswandung 3a der Trommel 3 reduziert oder ganz ausgesetzt wird.

Wird nun der Betätigungshebel im Uhrzeigersinn (siehe Fig. 1) um die Achse 2 verschwenkt, so ist die Reibung des Federelements an der Umfangswandung 3a so gerichtet, daß das Federelement 5 radial aufgespreizt wird und die Reibung somit vergrößert wird. Hierdurch wird eine Mitnahme der Trommel 3 entgegen der Kraft des Zugseils und entsprechend der Drehung des Betätigungshebels 1 gewährleistet.

Eine Feststellung des Betätigungshebels in einer betätigten Stellung wird auf bekannte Weise mitttels des Rastenelements 1a und einer (nicht dargestellten) Sperrklinkenvorrichtung gewährleistet. Eine Lösung des Betätigungshebels geschieht auf ebenso bekannte Weise mittels einer beispielsweise seilzugbetätigten Lösevorrichtung, durch welche die Sperrklinke und das Rastenelement außer Eingriff gebracht werden. Eine Rückstellung des Betätigungshebels wird dann durch die rückstellende Kraft des Zugseils der Bremse geleistet.

## Patentansprüche

1. Feststellbremse für ein Kraftfahrzeug, umfassend
einen um eine Achse (2) drehbar gelagerten und in einer betätigten Stellung lösbar festlegbaren Betätigungshebel (1),
eine drehbare Trommel (3) mit einer Umfangswandung (3a),
ein in einem Innenraum der Trommel (3) angeordnetes und von innen gegen die Umfangswandung (3a) der Trommel (3) abstützbares, aus einem Federdraht (5a) ausgebildetes Federelement (5),
ein an der Trommel (3) festgelegtes Zugseil, und
eine einerseits gegen die Trommel (3) und andererseits gegen den Betätigungshebel (1) abgestützte Nachstellfeder (4),
**dadurch gekennzeichnet,**
**daß** die Trommel (3) um die Achse (2) drehbar gelagert ist, und
**daß** ein festes Ende (5b) des Federdrahtes (5a) außerhalb der Trommel (3) an dem Betätigungshebel (1) festgelegt ist.

2. Feststellbremse nach Anspruch 1, **dadurch gekennzeichnet, daß** die Umfangswandung (3a) der Trommel (3) Durchbrechungen (3e) aufweist, wobei das feste Ende (5b) des Federdrahtes (5a) durch die Durchbrechungen (3e) aus der Trommel (3) herausgeführt ist.

3. Feststellbremse nach Anspruch 1 oder 2, **dadurch gekennzeichnet, daß** ein freies Ende (5c) des Federdrahtes (5a) aus der Trommel (3) herausgeführt ist.

4. Feststellbremse nach Anspruch 3, **dadurch gekennzeichnet, daß** ein karosseriefester Anschlag in einer nicht betätigten Stellung der Feststellbremse an dem freien Ende (5c) des Federdrahtes anschlägt.

5. Feststellbremse nach einem der Ansprüche 1 bis 4, **dadurch gekennzeichnet, daß** an dem Betätigungshebel (1) ein Rastenelement (1a) ausgebildet ist.

6. Feststellbremse nach einem der Ansprüche 1 bis 5, **dadurch gekennzeichnet, daß** das Rastenelement (1a) an dem Betätigungshebel (1) klemmend gehaltert und in einer Ebene mit dem Betätigungshebel (1) angeordnet ist.

7. Feststellbremse nach einem der Ansprüche 1 bis 6, **dadurch gekennzeichnet, daß** die Trommel (3) eine mittels einer Ausformung einer Bodenplatte (3b) der Trommel (3) gebildete Aussparung (3d) aufweist.

8. Feststellbremse nach Anspruch 7, **dadurch gekennzeichnet, daß** die Nachstellfeder (4) innerhalb der Aussparung (3d) der Trommel (3) angeordnet ist.

9. Feststellbremse nach einem der Ansprüche 1 bis 8, **dadurch gekennzeichnet, daß** ein Seilaufnahmeteil (7) an der Trommel festgelegt ist.

10. Feststellbremse nach einem der Ansprüche 1 bis 9, **dadurch gekennzeichnet, daß** das Zugseil die Trommel (3) zumindest teilweise umläuft.

## Claims

1. A parking brake for a motor vehicle, comprising
an actuating lever (1) which is mounted rotatably about an axis (2) and can be fixed releasably in an actuated position,
a rotatable drum (3) having a circumferential wall (3a),
a spring element (5) being formed from a spring wire (5a), which is arranged in an interior space of the drum (3) and supported from the inside against the circumferential wall (3a) of the drum (3),
a traction cable which is fixed to the drum (3), and
an adjusting spring (4) which is supported on one side against the drum (3) and on the other side against the actuating lever (1),
**characterized in**
**that** the drum (3) is mounted rotatably about the axis (2), and
**that** a fixed end (5b) of the spring wire (5a) is fixed to the actuating lever (1) outside the drum (3).

2. The parking brake as claimed in claim 1, **characterized in that** the circumferential wall (3a) of the drum (3) has apertures (3e), the fixed end (5b) of the spring wire (5a) being led out of the drum (3) through the apertures (3e).

3. The parking brake as claimed in claim 1 or 2, **characterized in that** a free end (5c) of the spring wire (5a) is led out of the drum (3).

4. The parking brake as claimed in claim 3, **characterized in that** a stop which is fixed on the bodywork strikes against the free end (5c) of the spring wire in a non-actuated position of the parking brake.

5. The parking brake as claimed in one of claims 1 to 4, **characterized in that** a latch element (1a) is formed on the actuating lever (1).

6. The parking brake as claimed in one of claims 1 to 5, **characterized in that** the latch element (1a) is secured to the actuating lever (1) by clamping and is arranged in a plane with the actuating lever (1).

7. The parking brake as claimed in one of claims 1 to 6, **characterized in that** the drum (3) has a recess (3d) formed by means of a molding of a base plate (3b) of the drum (3).

8. The parking brake as claimed in claim 7, **characterized in that** the adjusting spring (4) is arranged within the recess (3d) of the drum (3).

9. The parking brake as claimed in one of claims 1 to 8, **characterized in that** a cable-holding part (7) is fixed on the drum.

10. The parking brake as claimed in one of claims 1 to 9, **characterized in that** the traction cable at least partially encircles the drum (3).

## Revendications

1. Frein de stationnement pour un véhicule automobile, qui comprend
un levier d'actionnement (1) monté à rotation autour d'un axe (2) et apte à être placé de manière libérable dans une position actionnée,
un tambour rotatif (3) doté d'une paroi périphérique (3a),
un élément de ressort (5) constitué d'un fil de ressort (5a), disposé dans un espace intérieur du tambour (3) et apte à s'appuyer par l'intérieur contre la paroi périphérique (3a) du tambour (3),
un câble de traction fixé sur le tambour (3) et
un ressort de réglage (4) qui s'appuie d'une part contre le tambour (3) et d'autre part contre le levier d'actionnement (1),
**caractérisé en ce que**
le tambour (3) est monté à rotation autour de l'axe (2) et **en ce que**
une extrémité fixe (5b) du fil de ressort (5a) est fixée sur le levier d'actionnement (1) à l'extérieur du tambour (3).

2. Frein de stationnement selon la revendication 1, **caractérisé en ce que** la paroi périphérique (3a) du tambour (3) présente des perforations (3e), l'extrémité fixe (5b) du fil de ressort (5a) étant sortie du tambour (3) par les perforations (3e).

3. Frein de stationnement selon les revendications 1 ou 2, **caractérisé en ce qu'**une extrémité libre (5c) du fil de ressort (5a) est passée hors du tambour (3).

4. Frein de stationnement selon la revendication 3, **caractérisé en ce qu'**une butée fixe sur la carrosserie vient buter contre l'extrémité libre (5c) du fil de ressort lorsque le frein de stationnement est en position non actionnée.

5. Frein de stationnement selon l'une des revendications 1 à 4, **caractérisé en ce qu'**un élément d'encliquetage (1a) est réalisé sur le levier d'actionnement (1).

6. Frein de stationnement selon l'une des revendications 1 à 5, **caractérisé en ce que** l'élément d'encliquetage (1a) est maintenu par serrage sur le levier d'actionnement (1) et est disposé dans le même plan que le levier d'actionnement (1).

7. Frein de stationnement selon l'une des revendications 1 à 6, **caractérisé en ce que** le tambour (3) présente un évidement (3d) formé par déformation d'une plaque de base (3b) du tambour (3).

8. Frein de stationnement selon la revendication 7, **caractérisé en ce que** le ressort de réglage (4) est disposé à l'intérieur de l'évidement (3d) du tambour (3).

9. Frein de stationnement selon l'une des revendications 1 à 8, **caractérisé en ce qu'**une pièce (7) de réception de câble est fixée sur le tambour.

10. Frein de stationnement selon l'une des revendications 1 à 9, **caractérisé en ce qu'**au moins une partie du câble de traction entoure le tambour (3).
